# EUROPÄISCHE PATENTSCHRIFT

(11) **EP 0 618 399 B1**
(45) Veröffentlichungstag und Bekanntmachung des Hinweises auf die Patenterteilung: **13.11.1996**
(21) Anmeldenummer: 94105142.7
(22) Anmeldetag: 31.03.1994
(51) Int. Cl.: F16L 59/02, C04B 30/02, C04B 38/00

(54) **Mikroporöser Wärmedämmformkörper**
Microporous thermal insulation body
Corps calorifuge microporeux

(30) Priorität: 31.03.1993 DE 4310613
(43) Veröffentlichungstag der Anmeldung: 05.10.1994
(73) Patentinhaber: Wacker-Chemie GmbH, D-81737 München (DE); E.G.O. ELEKTRO-GERÄTEBAU GmbH, D-75038 Oberderdingen (DE)
(72) Erfinder: Kratel, Günter, Dr., D-87471 Durach-Bechen (DE); Stohr, Günter, Dr., D-87471 Durach (DE); Gross, Martin, D-75236 Kämpfelbach (DE); Wilde, Eugen, D-75438 Knittlingen (DE)

(56) Entgegenhaltungen:
- EP-A- 0 068 360
- EP-A- 0 248 918
- EP-A- 0 315 169
- EP-A- 0 518 513
- GB-A- 2 137 188
- US-A- 4 985 163

## Beschreibung

Die Erfindung betrifft einen mikroporösen Wärmedämmformkörper bestehend aus verpreßtem Wärmedämmaterial enthaltend 30 - 100 Gew.-% feinteiliges Metalloxid, 0 - 50 Gew.-% Trübungsmittel, 0 - 50 Gew.-% Fasermaterial und 0 - 15 Gew.-% anorganisches Bindemittel.

Derartige mikroporöse Wärmedämmformkörper sind bekannt und beispielsweise in US-A 4,985,163, beschrieben.

Vorzugsweise in derartigen mikroporösen Wärmedämmformkörpern verwendete, feinteilige Metalloxide sind pyrogen erzeugte Kieselsäuren einschließlich Lichtbogenkieselsäuren, Fällungskieselsäuren oder Siliciumdioxidaerogele sowie analog hergestellte Aluminiumoxide. Zur Erzielung guter Wärmeisoliereigenschaften besitzen diese feinteiligen Oxide sehr hohe spezifische Oberflächen, die vorzugsweise im Bereich von 50 - 700 m²/g (nach BET gemessen, wie in ASTM Special Technical Publication No 51., 1941 Seite ff. beschrieben) liegen. Bedingt durch diese großen Oberflächen ist das Adsorptionsvermögen dieser Oxide gegenüber polaren Substanzen sehr stark ausgeprägt. Bekannterweise wirken sie daher als sehr effektive Trockenmittel und nehmen in natürlicher Atmosphäre begierig Wasser auf. Gleiches Verhalten zeigen dementsprechend auch die daraus hergestellten mikroporösen Wärmedämmformkörper. In der Praxis läßt sich daher eine Feuchtigkeitsaufnahme der mikroporösen Wärmedämmformkörper während der Lagerung und des Gebrauchs nicht verhindern. Werden nun diese mikroporösen Wärmedämmformkörper im praktischen Einsatz innerhalb kurzer Zeit einer hohen thermischen Energie ausgesetzt, so entsteht explosionsartig Wasserdampf, der die Struktur des Wärmedämmformkörpers zerstört. Dieser Effekt tritt beispielsweise bei mikroporösen Wärmedämmformkörpern auf, die als Wärmeisolierung in Strahlungsheizeinheiten für Keramikkochfelder verwendet werden, falls diese Strahlungsheizeinheiten mittels der üblichen Widerstandsheizelemente in dazu für die neueste Generation derartiger Einheiten üblichen Intervallen von vorzugsweise 1 bis 5 Sekunden zum Glühen gebracht werden. Diese kurzen Aufheizzeiten sind auf Grund des geänderten Verbraucherverhaltens jedoch unabdingbar.

Aufgabe der Erfindung ist die Erhöhung der Gasdurchlässigkeit von mikroporösen Wärmedämmformkörpern, insbesondere die Erhöhung der Wasserdampfdiffusion vom Innern zur Oberfläche des Formkörpers und damit die Vermeidung von lokalem Überdruck im Innern der Formkörper, der die Struktur des Formkörpers zerstören würde.

Gegenstand der Erfindung ist ein mikroporöser Wärmedämmformkörper bestehend aus verpreßtem Wärmedämmaterial enthaltend 30 - 100 Gew.-% feinteiliges Metalloxid, 0 - 50 Gew.-% Trübungsmittel, 0 - 50 Gew.-% Fasermaterial und 0 - 15 Gew.-% anorganisches Bindemittel, dadurch gekennzeichnet, daß zumindest eine Oberfläche des Formkörpers Kanalporen mit einer Grundfläche der Pore von 0,01 - 8 mm² und mit einer Eindringtiefe von 5 - 100 %, bezogen auf die Dicke des Formkörpers, aufweist, wobei pro 1 cm² der Formkörperoberfläche 0,004 - 10 Kanalporen enthalten sind.

Erfindungsgemäße Wärmedämmformkörper behalten selbst nach extremer Wasseraufnahme bei schockartigem Erhitzen ihre Struktur bei, ohne daß die Wärmeisoliereigenschaften des Formkörpers reduziert werden.

Üblicherweise haben die erfindungsgemäßen Wärmedämmformkörper folgende Kenngrößen:
Dichte 250 - 350 g/l
Biegefestigkeit > 0,15 N/mm2
Druckfestigkeit > 1,0 N/mm2
Wärmeleitzahl < 0,025 W/mK
Elektrischer Widerstand > 2000 MΩ

Erfindungsgemäß verwendetes Wärmedämmaterial weist folgende Zusammensetzung auf:
30 - 100 Gew.-% feinteiliges Metalloxid
0 - 50 Gew.-% Trübungsmittel
0 - 50 Gew.-% Fasermaterial
0 - 15 Gew.-% anorganisches Bindematerial.

Bevorzugte Zusammensetzungen enthalten:
30 - 89 Gew.-% feinteiliges Metalloxid
10 - 50 Gew.-% Trübungsmittel
1 - 50 Gew.-% Fasermaterial
0 - 5 Gew.-% anorganisches Bindematerial.

Besonders gute Ergebnisse werden mit folgenden Zusammensetzungen erreicht:
50 - 89 Gew.-% feinteiliges Metalloxid
20 - 40 Gew.-% Trübungsmittel
5 - 20 Gew.-% Fasermaterial
0,5 - 2 Gew.-% anorganisches Bindematerial.

Vorzugsweise verwendete, feinteilige Metalloxide sind pyrogen erzeugte Kieselsäuren, einschließlich Lichtbogenkieselsäuren, alkaliarme Fällungskieselsäuren, Siliciumdioxidaerogele, analog hergestellte Aluminiumoxide sowie deren Mischungen. Vorzugsweise werden pyrogen erzeugte Kieselsäure, Aluminiumoxid oder deren Mischung verwendet. Die feinteiligen Metalloxide weisen spezifische Oberflächen nach BET von vorzugsweise 50 - 700 m²/g, insbesondere 70 -400 m²/g, auf.

Beispiele für Trübungsmittel sind Ilmenit, Titandioxid, Siliciumcarbid, Eisen-II-Eisen-III-Mischoxid, Chromdioxid, Zirkonoxid, Mangandioxid, Eisenoxid, Siliciumdioxid, Aluminiumoxid und Zirkonsilikat, sowie deren Mischungen. Vorzugsweise werden Ilmenit und Zirkonsilikat verwendet. Die Trübungsmittel weisen vorteilhafterweise ein Absorptionsmaximum im Infrarotbereich zwischen 1,5 und 10 µm auf.

Beispiele für Fasermaterialien sind Glaswolle, Steinwolle, Basaltwolle, Schlackenwolle und keramische Fasern, wie sie aus Schmelzen von Aluminium- und/oder Siliciumoxid gewonnen werden, sowie deren Mischungen. Vorzugsweise werden Fasern, gewonnen aus der Schmelze von Aluminium- und/oder Siliciumoxid, verwendet. Vorzugsweise weisen diese Fasern folgende
- Dimensionen auf:: Durchmesser 0,1 - 12 µm
Länge 1 - 25 mm

Als anorganische Bindemittel können alle Bindemittel, deren Einsatz in mikroporösen Wärmedämmformkörpern bekannt ist, verwendet werden. Beispiele solcher Bindemittel sind in der US-A 4,985,163 offenbart, auf die in diesem Zusammenhang ausdrücklich verwiesen wird. Vorzugsweise werden Boride des Aluminiums, des Titans, des Zirkons, des Calciums, Silicide, wie Calciumsilicid und Calcium-Aluminium-Silicid, insbesondere Borcarbid eingesetzt. Beispiele für weitere Bestandteile sind basische Oxide, insbesondere Magnesiumoxid, Calciumoxid oder Bariumoxid.

Für die Gasdurchlässigkeit und damit für die Funktionsfähigkeit der Kanalporen haben sich folgende Faktoren von Bedeutung erwiesen: Räumliche Verteilung, Grundfläche und Eindringtiefe. Die Anzahl der Kanalporen pro 1 cm² Formkörperoberfläche beträgt 0,004 bis 10 Kanalporen, vorzugsweise 0,15 bis 0,6.Die Grundfläche der Kanalporen beträgt 0,01 mm² - 8 mm², vorzugsweise 0,10 - 0,8 mm². Die Eindringtiefe ist abhängig von der Dicke des Formkörpers und beträgt 5 - 100 %, vorzugsweise 40 - 70 %, bezogen auf die Dicke des Formkörpers von der thermisch beaufschlagten Seite des Formkörpers betrachtet.

Die Herstellung der erfindungsgemäßen Wärmedämmformkörper aus verpreßtem Wärmedämmaterial umfaßt vorzugsweise folgende Verfahrensschritte:
I. Vorverdichten der Wärmedämmischung auf Basis von feinverteiltem Metalloxid bei Drücken von 1 bis 5 bar, insbesondere 2 bar oder ungefähr 2 bar und Verpressen des vorverdichteten Materials in die gewünschte Form bei Enddrücken von 8 bis 20 bar, wobei die Dicke der resultierenden Formen vorzugsweise 10 bis 35 mm, insbesondere 10 bis 15 mm, beträgt;
II. Gegebenenfalls Erhitzen des verpreßten Körpers bei Temperaturen von 500 bis 900°C (Härtungsprozeß).
III. Bildung der Kanalporen
   1. während Vorgang I oder
   2. nach Vorgang I oder
   3. nach Vorgang II.

Die Formgebung der Kanalporen erfolgt dabei mit an sich bekannten Vorrichtungen zur Ausgestaltung von Kanälen, wie beispielsweise Bohrern, Stanzen oder Fräsen; vorzugsweise werden jedoch Prägestempel verwendet.

Beispiele für die Form der Grundfläche der Kanalporen sind Kreise, Dreiecke, Rechtecke, Quadrate. Falls gewünscht, kann diese Grundfläche auch über die Eindringtiefe variieren. Vorzugsweise sind die Kanalporen kreisförmig.

Die erfindungsgemäßen Wärmedämmformkörper finden Verwendung in allen Bereichen, in denen auch bisher mikroporöse Wärmedämmformkörper eingesetzt wurden, wie beispielsweise in Strahlungsheizeinheiten zur Beheizung einer Platte, insbesondere einer Glaskeramikplatte, in Strahlungsbeheizungen von Öfen, insbesondere Backöfen, in Heizstrahlern oder in Halogenstrahlern. Heizstrahler besitzen als Wärmequelle einen Heizdraht oder ein Heizband, Halogenstrahler eine Halogenlampe. Neuerdings sind Halogen- und Heizdraht- oder Heizbandbeheizungen kombiniert in einem Heizstrahler bekannt geworden.

### Vergleichsbeispiel

Eine Wärmedämmischung der Zusammensetzung
62,5 Gew.-% pyrogen erzeugte Kieselsäure
31,7 Gew.-% Zirkonsilikat
5 Gew.-% Aluminiumsilikatfaser
0,8 Gew.-% Borcarbid
wurde zu einem Formteil mit 198 mm Durchmesser und 13 mm Dicke gepreßt und 1 Stunde bei 800°C im Ofen behandelt.

Der erhaltene Formkörper wurde bei 30°C in 93 % relativer Luftfeuchtigkeit 40 Stunden gelagert. Die Wasseraufnahme betrug 11%, bezogen auf das Gesamtgewicht der Isolierung. Dieser mit Feuchtigkeit versehene Formkörper wurde wie nachfolgend beschrieben getestet:
a) Direkte Aufheizung: Eine fertig montierte Strahlungsheizeinheit bestehend aus mikroporösem Wärmedämmformkörper und Heizband wurde analog der späteren Anwendung mit einer Wärmedämmplatte abgedeckt und bei einer Heizleistung von 1800 W über 30 - 60 Sekunden aufgeheizt.
b) Indirekte Aufheizung: Der mikroporöse Wärmedämmformkörper wurde mittels eines über seiner Oberfläche montierten Heizelements mit einer Heizleistung von 1800 W über 30 - 60 Sekunden aufgeheizt.

Ergebnis: In beiden Fällen platzen die Formkörper, aufgrund des zu hohen Wasserdampfdruckes im Innern der Teile, auf.

### Beispiel

Ein mikroporöser Wärmedämmformkörper wurde gemäß dem Vergleichsbeispiel hergestellt und einmal vor und einmal nach der thermischen Behandlung bei 800°C durch das Eindrücken von Stiften mit einem Druchmesser von 0,3 mm² und einer Länge von 8 mm mit 0,35 Kanalporen pro 1 cm² Formkörperoberfläche versehen.

Die so erhaltenen Formkörper wurden analog dem Vergleichsbeispiel direkt und indirekt aufgeheizt.

Ergebnis: Ein Aufplatzen wie im Vergleichsbeispiel wurde nicht beobachtet; die Formkörper wurden nicht geschädigt.

## Patentansprüche

1. Mikroporöser Wärmedämmformkörper bestehend aus verpreßtem Wärmedämmaterial enthaltend 30 - 100 Gew.-% feinteiliges Metalloxid, 0 - 50 Gew.-% Trübungsmittel, 0 - 50 Gew.-% Fasermaterial und 0 - 15 Gew.-% anorganisches Bindemittel, dadurch gekennzeichnet, daß zumindest eine Oberfläche des Formkörpers Kanalporen mit einer Grundfläche der Pore von 0,01 - 8 mm² und mit einer Eindringtiefe von 5 - 100 %, bezogen auf die Dicke des Formkörpers, aufweist, wobei pro 1 cm² der Formkörperoberfläche 0,004 - 10 Kanalporen enthalten sind.

2. Mikroporöser Wärmedämmformkörper nach Anspruch 1, dadurch gekennzeichnet, daß die eingesetzten, feinteiligen Metalloxide spezifische Oberflächen nach BET von 50 - 700 m²/g aufweisen.

3. Mikroporöser Wärmedämmformkörper nach Anspruch 1 und 2, dadurch gekennzeichnet, daß als feinteilige Metalloxide pyrogen erzeugte Kieselsäuren, einschließlich Lichtbogenkieselsäuren, alkaliarme Fällungskieselsäuren, Siliciumdioxidaerogele, analog hergestellte Aluminiumoxide sowie deren Mischungen eingesetzt werden.

4. Mikroporöser Wärmedämmformkörper nach einem oder mehreren der Ansprüche 1 bis 3, dadurch gekennzeichnet, daß pro 1 cm² Formkörperoberfläche 0,15 bis 0,7 Kanalporen enthalten sind.

5. Mikroporöser Wärmedämmformkörper nach einem oder mehreren der Ansprüche 1 bis 4, dadurch gekennzeichnet, daß die Grundfläche der Kanalporen 0,10 bis 0,8 mm² beträgt.

6. Mikroporöser Wärmedämmformkörper nach einem oder mehreren der Ansprüche 1 bis 5, dadurch gekennzeichnet, daß die Eindringtiefe 40 - 70 %, bezogen auf die Dicke des Formkörpers, beträgt.

7. Verwendung der mikroporösen Wärmedämmformkörper nach einem oder mehreren der Ansprüche 1 bis 6 in Strahlungsheizeinheiten zur Beheizung einer Platte, in Strahlungsbeheizungen von Öfen, in Heizstrahlern oder in Halogenstrahlern.

## Claims

1. Microporous thermal insulation moulding comprising pressed thermal insulation material comprising 30 - 100% by weight of finely divided metal oxide, 0 - 50% by weight of opacifier, 0 - 50% by weight of fibre material and 0 - 15% by weight of inorganic binder, characterized in that at least one surface of the moulding has channel pores having a cross-sectional area of the pore of 0.01 - 8 mm² and having an intrusion depth of 5 - 100%, based on the thickness of the moulding, with 0.004 - 10 channel pores being present per 1 cm² of the moulding surface.

2. Microporous thermal insulation moulding according to Claim 1, characterized in that the finely divided metal oxides used have BET surface areas of 50 - 700 m²/g.

3. Microporous thermal insulation moulding according to Claims 1 and 2, characterized in that the finely divided metal oxides used are pyrogenic silicas, including electric arc silicas, low-alkali precipitated silicas, silicon dioxide aerogels, analogously prepared aluminium oxides and mixtures thereof.

4. Microporous thermal insulation moulding according to one or more of Claims 1 to 3, characterized in that from 0.15 to 0.7 channel pores are present per 1 cm² of moulding surface.

5. Microporous thermal insulation moulding according to one or more of Claims 1 to 4, characterized in that the cross-sectional area of the channel pores is from 0.10 to 0.8 mm².

6. Microporous thermal insulation moulding according to one or more of Claims 1 to 5, characterized in that the intrusion depth is 40 - 70%, based on the thickness of the moulding.

7. Use of the microporous thermal insulation moulding according to one or more of Claims 1 to 6 in radiative heating units for heating a plate, in radiative heating of ovens, in heat radiators or in halogen radiators.

## Revendications

1. Moulage calorifuge microporeux, comprenant un matériau calorifuge pressé comprenant 30-100% en poids d'oxyde métallique finement divisé, 0-50% en poids d'opacifiant, 0-50% en poids de matériau fibreux et O-15% en poids de liant minéral, caractérisé en ce qu'au moins une surface du moulage possède des pores en canal ayant une aire de section droite de pore de 0,01-8 mm² et ayant une profondeur d'intrusion de 5-100%, rapportée à l'épaisseur du moulage, 0,004-10 pores en canal étant présents par cm² de surface de moulage.

2. Moulage calorifuge microporeux selon la revendication 1, caractérisé en ce que les oxydes métalliques finement divisés ont des surfaces spécifiques BET de 50-700 m²/g.

3. Moulage calorifuge microporeux selon les revendications 1 et 2, caractérisé en ce que les oxydes métalliques finement divisés sont des silices pyrogènes, y compris des silices d'arc électrique, des silices précipitées à faible teneur en base, des aérogels de dioxyde de silicium, des oxydes d'aluminium préparés de façon analogue, et leurs mélanges.

4. Moulage calorifuge microporeux selon l'une quelconque des revendications 1 à 3, caractérisé en ce que de 0,15 à 0,7 pores en canal sont présents par cm² de surface de moulage.

5. Moulage calorifuge microporeux selon l'une quelconque des revendications 1 à 4, caractérisé en ce que l'aire de la section droite des pores en canal est de 0,10 à 0,8 mm².

6. Moulage calorifuge microporeux selon l'une quelconque des revendications 1 à 5, caractérisé en ce que la profondeur d'intrusion est de 40-70%, rapportée à l'épaisseur du moulage.

7. Utilisation du moulage calorifuge microporeux selon l'une quelconque des revendications 1 à 6 dans des unités de chauffage radiant pour chauffer une plaque, dans le chauffage radiant des fours, dans les radiateurs thermiques ou dans les radiateurs à halogènes.
